# EUROPEAN PATENT SPECIFICATION

(11) **EP 2 555 497 B1**
(45) Date of publication and mention of the grant of the patent: **08.07.2015**
(21) Application number: 12168938.4
(22) Date of filing: 22.05.2012
(51) Int. Cl.: H04M 1/67, H04M 1/725, G06F 3/0488, G06F 1/16, G06F 3/0485

(54) **Controlling responsiveness to user inputs**
Steuerung der Reaktionsfähigkeit auf Benutzereingaben
Contrôle de la réactivité aux entrées d'utilisateur

(30) Priority: 05.08.2011 US 201113204406
(43) Date of publication of application: 06.02.2013
(73) Proprietor: Nokia Technologies Oy, 02610 Espoo (FI)
(72) Inventor: Colley, Ashley, 90800 Oulu (FI)
(74) Representative: Derry, Paul Stefan

(56) References cited:
- WO-A1-99/37077
- WO-A2-2008/004123
- US-A1- 2002 051 018
- US-A1- 2005 107 126
- US-A1- 2008 055 276
- US-A1- 2008 165 144

## Description

### Field

This invention relates to controlling responsiveness to user inputs on a terminal, particularly, though not exclusively, a terminal having a touch-sensitive display.

### Background

It is common for data terminals such as mobile telephones, data tablets and PDAs to provide a touch-sensitive display through which a user can interact with software executed on a processor of the terminal.

Touch-sensitive displays may be particularly susceptible to accidental operation. This accidental operation can cause software functions to be executed, which for example can result in a voice or data call being inadvertently made over a network, or unintentional interaction with an application running on the terminal.

For this reason, many terminals provide a lock mode, typically as part of their operating system, which replaces displayed application content through which inputs can be received with a dedicated lock mode interface, usually a blank screen or a screensaver such as a still image or an animation, in which virtually all user inputs are blocked. It is known also to provide a translucent overlay over a home screen when in locked mode. In order to exit the lock mode, a specific series of inputs are required. The lock mode is either manually selected or entered automatically following a period during which no user inputs are received.

When the terminal is being used in a situation which makes it susceptible to accidental operation, for example when the user is walking, it would be desirable for the user to be able to continue to interact with content with a reduced risk of accidental operation. Clearly, the above-described lock mode is not suitable for this purpose as it switches from the current content to the lock screen and would require the user to manually exit this mode through the required sequence of unlocking inputs.

US2008/055276 relates to a method for controllable partial lock in portable device having touch input unit.

WO2008/004123 relates to an electronic device having a plurality of modes of operation.

WO99/37077 relates to apparatus and method for prevention of accidental activation of keys in a wireless communication device.

US2005/0107126 relates to a mobile device and method for preventing undesired key depression in the same.

US2010/0159995 relates to an interactive locked state mobile communication device.

### Summary

According to aspects of the invention there are provided an apparatus according to claim 1 and a method according to claim 15.

### Brief Description of the Drawings

Embodiments of the invention will now be described, by way of example only, with reference to the accompanying drawings, in which:
Figure 1 is a perspective view of a mobile terminal embodying aspects of the invention;
Figure 2 is a schematic diagram illustrating components of the Figure 1 mobile terminal and their interconnection;
Figure 3 is a schematic diagram illustrating certain components shown in Figure 2 relevant to operation of the invention;
Figures 4 and 5 are state diagrams showing different modes of operation in respective first and second embodiments ;
Figure 6 is a schematic diagram showing certain components of the system shown in Figure 2 using a first type of lock mode selector;
Figure 7 is a schematic diagram showing certain components of the system shown in Figure 2 using a second type of lock mode selector;
Figure 8 is a schematic diagram showing certain components of the system shown in Figure 2, including a plurality of User Interface interaction definitions associated with different modes of operation;
Figure 9 is a flow diagram indicating processing steps performed in accordance with the invention;
Figure 10 is a schematic diagram showing a user interface of the terminal in a third embodiment of the invention;
Figure 11 is a schematic diagram showing a user interface of the terminal in a fourth embodiment of the invention;
Figure 12 is a schematic diagram showing a user interface of the terminal in a fifth embodiment of the invention;
Figure 13 is a schematic diagram showing a user interface of the terminal in a sixth embodiment of the invention;
Figure 14 is a schematic diagram showing a user interface of the terminal in a seventh embodiment of the invention; and
Figure 15 is a schematic diagram showing a user interface of the terminal in an eighth embodiment of the invention;

### Description

Embodiments described herein relate to an apparatus configured to switch from an unlocked mode in which a first set of user interactions can be made through a user interface to effect certain functions, to a partial lock mode in which a different set of user interactions are made available to the user in relation to the same, or substantially similar, displayed content. Switching does not cause the currently-displayed content to entirely disappear, as in a conventional transition to a lock mode, but rather the same or substantially the same content continues to be displayed. Switching between the modes can take place in response to manual selection, for example using a hardware or software switch, or can take place automatically in response to one or more sensors of the apparatus detecting a predetermined operating condition, e.g. the user being in motion. In this way, user interactions more suited to the operating condition can be provided without the user having to manually exit a lock mode user interface by means of a series of unlock commands.

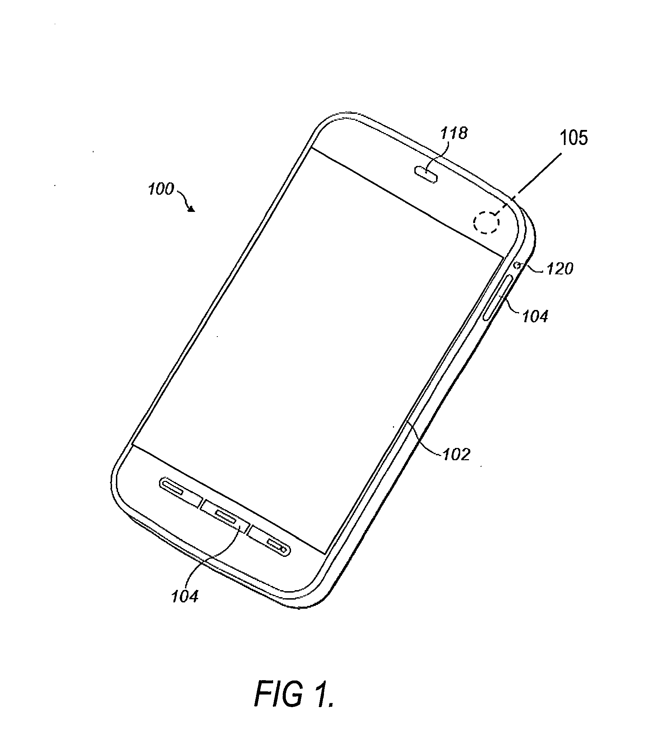

Referring firstly to Figure 1, a terminal 100 is shown. The exterior of the terminal 100 has a touch sensitive display 102, hardware keys 104, a speaker 118 and a headphone port 120.

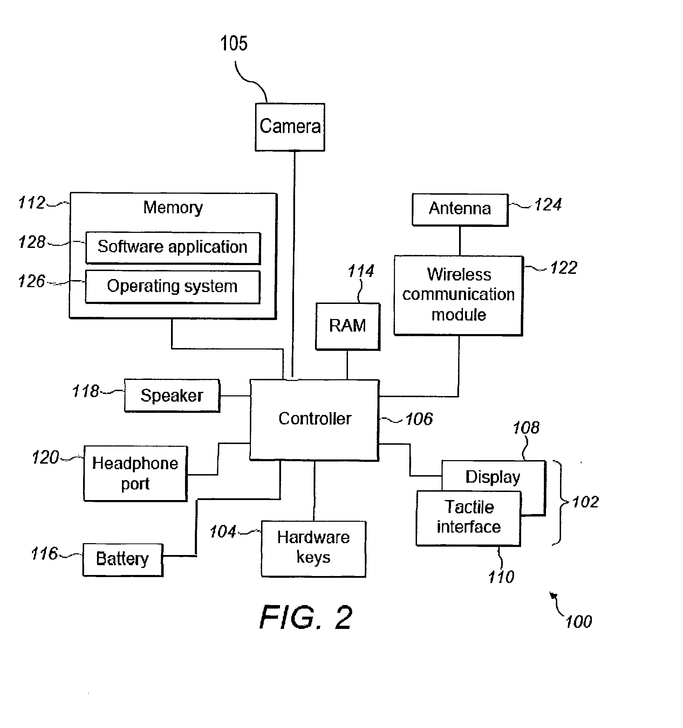

Figure 2 shows a schematic diagram of the components of terminal 100. The terminal 100 has a controller 106, a touch sensitive display 102 comprised of a display part 108 and a tactile interface part 110, the hardware keys 104, a memory 112, RAM 114, a speaker 118, the headphone port 120, a wireless communication module 122, an antenna 124 and a battery 116. The controller 106 is connected to each of the other components (except the battery 116) in order to control operation thereof.

The memory 112 may be a non-volatile memory such as read only memory (ROM) a hard disk drive (HDD) or a solid state drive (SSD). The memory 112 stores, amongst other things, an operating system 126 and may store software applications 128. The RAM 114 is used by the controller 106 for the temporary storage of data. The operating system 126 may contain code which, when executed by the controller 106 in conjunction with RAM 114, controls operation of each of the hardware components of the terminal.

The controller 106 may take any suitable form. For instance, it may be a microcontroller, plural microcontrollers, a processor, or plural processors.

The terminal 100 may be a mobile telephone or smartphone, a personal digital assistant (PDA), a portable media player (PMP), a portable computer or any other device capable of running software applications and providing audio outputs. In some embodiments, the terminal 100 may engage in cellular communications using the wireless communications module 122 and the antenna 124. The wireless communications module 122 may be configured to communicate via several protocols such as GSM, CDMA, UMTS, Bluetooth and IEEE 802.11 (Wi-Fi).

The display part 108 of the touch sensitive display 102 is for displaying images and text to users of the terminal and the tactile interface part 110 is for receiving touch inputs from users.

As well as storing the operating system 126 and software applications 128, the memory 112 may also store multimedia files such as music and video files. A wide variety of software applications 128 may be installed on the terminal including web browsers, radio and music players, games and utility applications. Some or all of the software applications stored on the terminal may provide audio outputs. The audio provided by the applications may be converted into sound by the speaker(s) 118 of the terminal or, if headphones or speakers have been connected to the headphone port 120, by the headphones or speakers connected to the headphone port 120.

In some embodiments the terminal 100 may also be associated with external software applications not stored on the terminal. These may be applications stored on a remote server device and may run partly or exclusively on the remote server device. These applications can be termed cloud-hosted applications. The terminal 100 may be in communication with the remote server device in order to utilise the software application stored there. This may include receiving audio outputs provided by the external software application.

In some embodiments, the hardware keys 104 are dedicated volume control keys or switches. The hardware keys may for example comprise two adjacent keys, a single rocker switch or a rotary dial. In some embodiments, the hardware keys 104 are located on the side of the terminal 100.

As will be appreciated, in certain situations such as in a so-called 'heads up' situation where the user is walking with the terminal 100 in their hand, it is more likely for touch commands or gestures to be inadvertently inputted to the operating system 126 or applications 128 running on the processor 106. It is more likely also that a touch gesture or command is incorrectly placed, which would normally result in an action different to the action desired by the user.

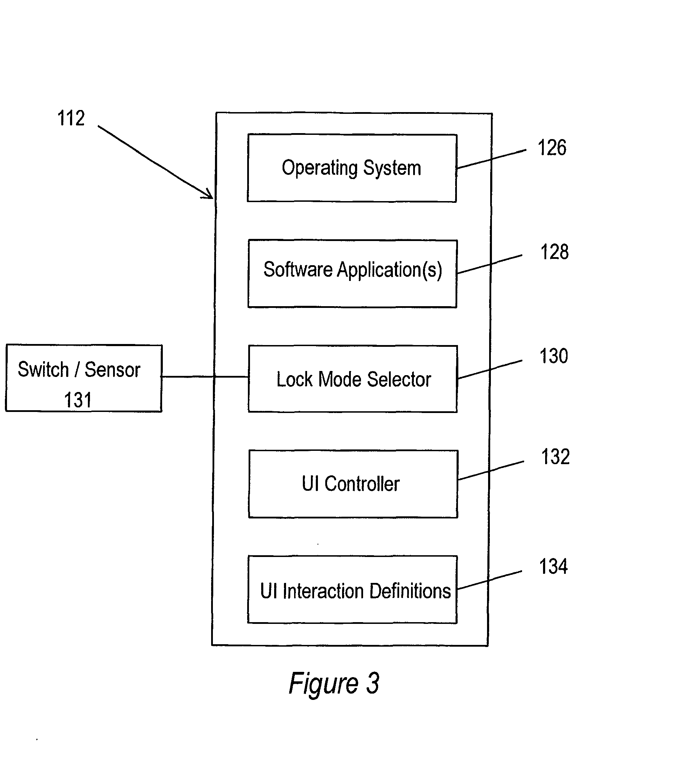

To counter this, and referring now to Figure 3, further functional components are provided on the apparatus, in this case software components stored on the memory 112. Specifically, a lock mode selector 130 is provided through which selection of one of a plurality of operating modes is made. The lock mode selector 130 receives input either from a switch or sensor(s) 131 of the terminal 100, as will be explained below.

A user interface (UI) controller 132 cooperates with a set of UI interaction definitions 134 to determine the responsiveness of user inputs or gestures made through the touch sensitive display 102, dependent on the mode selected in the lock mode selector 130. The UI interaction definitions 134 comprise sets of data defining respectively how inputs or gestures received through the display 102 are interpreted by the UI controller to effect, for example, selections, link activations, and gestural inputs or the blocking/rejection of inputs.

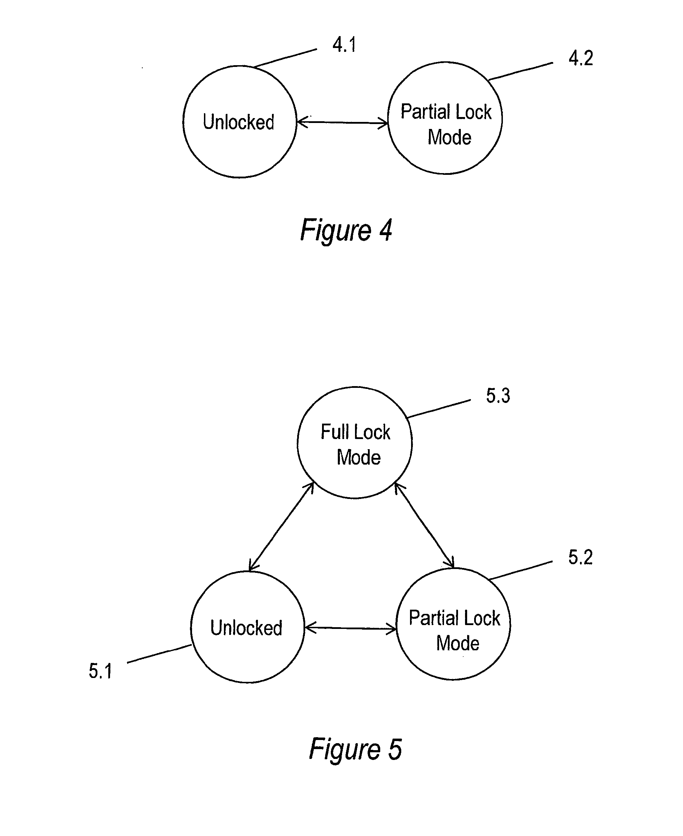

Referring to Figure 4, in a first embodiment, the terminal 100 is configured to switch between an unlocked mode of operation 4.1 and a partial lock mode of operation 4.2. In the unlocked mode 4.1, the full range of user interactions that can be inputted to currently-displayed content on the display 102 is available. In the partial lock mode of operation 4.2, the displayed application content does not substantially change but the UI controller 132 accesses an associated UI interaction definition 134 which, when effected by the UI controller, defines a modified set of user interactions that is different from a set of user interactions that are available in the unlocked mode 4.1 in one or more respects. Transition from the unlocked mode 4.1 to the partial lock mode 4.2 does not result in the application content being replaced, even temporarily, with a screensaver or by presenting a blank screen.

Referring to Figure 5, in a second embodiment, the terminal 100 is configured to switch between three modes of operation, namely the unlocked mode of operation 5.1, the partial lock mode 5.2 and a full lock mode 5.3.

The full lock mode 5.3 is entered when specifically selected by a user through a hardware or software input, or following a period of inactivity as defined in the terminal's settings, e.g. after two minutes of inactivity. Unlike the transition to the partial lock mode 5.2, the transition to the full lock mode 5.3 changes the current content being displayed to a default screensaver or blank screen requiring a predefined series of manual interactions to exit the full lock mode 5.3.

The unlocked mode 5.1 is entered when specifically selected by a user through a hardware or software input, or is automatically selected by the operating system or an application on detection of predetermined conditions being present or on detection of a predetermined trigger. Selection of the unlocked mode 5.1 may occur by a user performing an unlock action when the terminal 100 is in the locked mode 5.3. Selection of the unlocked mode 5.1 may occur automatically by the operating system or an application for instance when the terminal 100 is powered-up, when an alarm indicator is provided or when an incoming call alert is being provided, for instance.

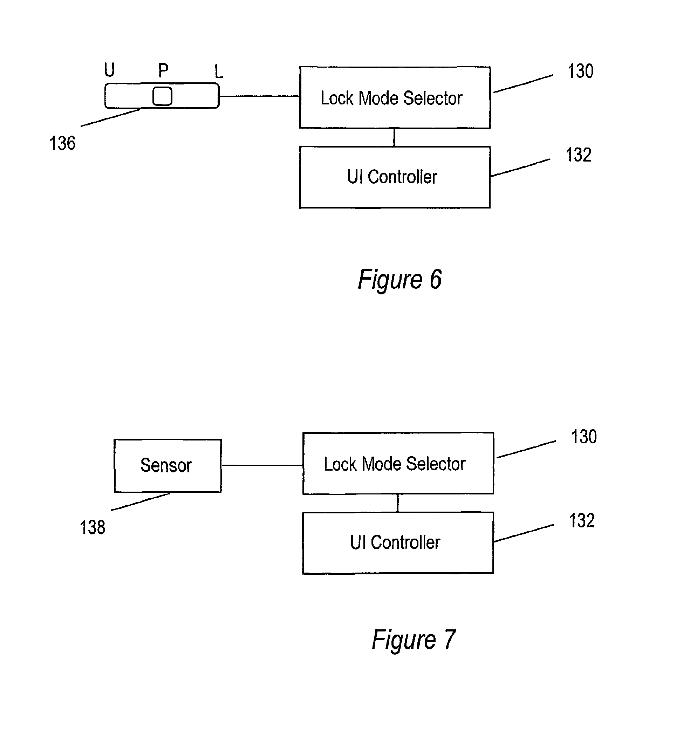

Referring to Figure 6, one way in which the operating mode can be selected is by means of a manual selector switch 136 which can be a hardware switch provided on the body of the terminal 100 or a software switch, e.g. a slider image presented on part of the display 102. In this case, a three position switch 136 is shown in accordance with the second embodiment having the unlock (U), partial lock (P) and full lock (L) modes of operation but a two position switch can be used in the case of the first embodiment. The position of the switch 136 provides data to the lock mode selector 130 which identifies the mode of operation to provide to the UI controller 132. In Figure 6, the partial lock position is shown centrally, although it may instead be the unlocked or full lock position that is central. Alternatively, the switch 136 may be non-linear, so not requiring two transitions between two of the three possible states.

Referring to Figure 7, in an alternative implementation of the lock mode selector 130, one or more sensors 138 are provided on the terminal which provide(s) sensed input to the lock mode selector 130. Here, the lock mode selector 130 determines automatically when to switch from an unlocked mode to a partial lock mode based on predetermined context data. Example sensors 138 can be one or more of a user headset, a microphone, an accelerometer, a gyroscope and/or a geographic positional sensor such as a GPS receiver, commonly provided on smart phones, PDAs and data tablets. The context data may indicate that the switch from an unlocked mode to a partial lock mode is made when the user is walking, identified by means of a sensed movement or a change in movement detected by the or each sensor 138. The context data may also or alternatively indicate a mode switch condition based on orientation of the apparatus 100, e.g. by sensing that it is inverted, to initiate a transition to the partially locked state and normal orientation to initiate a transition to the unlocked mode. Switching between modes can be performed automatically in this implementation.

Other sensor-based examples include the use of a near-field communication (NFC) proximity trigger to activate/deactivate the partial lock mode. In this case, the terminal 100 is provided with a NFC reader which is responsive to an in-range NFC tag, which can trigger transition from the unlocked mode to the partial lock mode or vice versa. Another sensor based example is the use of a light sensor, optionally in combination with one or more other sensors. For instance, the terminal 100 may be configured to transition from locked mode to partial lock mode on detecting a transition from low background light to high background light whilst a gyroscope detects that the terminal is in motion having periodicity, indication that the user has removed the terminal from a bag or pocket whilst walking.

Time of day, as determined by an internal clock or with reference to signals received from a network, may be used to initiate transition into or out of partial lock mode either alone or in conjunction with sensor input information.

A further example is the detection of a motion-based gesture performed on the terminal, such as by detecting a shaking gesture, to toggle between the unlocked and locked modes of operation using the motion sensors mentioned previously.

A yet further example is the detection of a predetermined touch-based gesture on the touch-sensitive display 102, e.g. when the user makes a circle gesture anywhere on the display, a mode toggle is performed. Multi-touch gestures can also be employed for this detection/toggle purpose.

The terminal 100 is also configured to permit the partial lock mode to be manually overridden, for example using the switch interface or by means of a predetermined gesture detected by the lock mode selector 130.

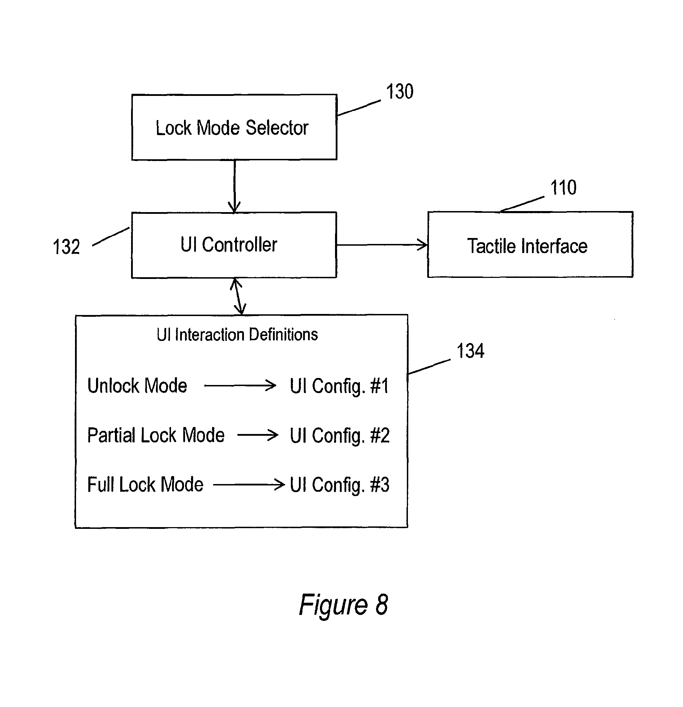

Referring to Figure 8, the operation of the lock mode selector 130, UI controller 132 and the UI interaction definitions 134 will now be explained. Depending on the current lock mode of the lock mode selector 130, e.g. U, P or L, the UI controller 132 accesses the UI definitions to effect a corresponding UI configuration, in this case either #1, #2 or #3. Each UI configuration is a set of data defining how touch inputs or gestures received through the tactile interface ₁₁₀ are interpreted by the operating system 126 or software application(s) 128 when executed and presented on the display 102. The display 102 is omitted from Figure 8 for clarity.

In the case of the unlock mode, UI configuration #1 is effected which allows all inputs appropriate to the currently-displayed content, be they selections, browser commands, link activations, scrolling, panning, zooming and so on. In the case of the full lock mode, where the operating system 126 replaces current content with a blank screen or screensaver, the UI configuration #3 is effected which requires a specific series of unlock interactions to be made in a given order to exit said mode and re-display previous content.

In the case of a switch to the partial lock mode, the displayed application content remains the same or substantially similar; however, the UI controller 132 effects UI configuration #2 which modifies how user inputs or gestures are interpreted in relation to the same or similar content.

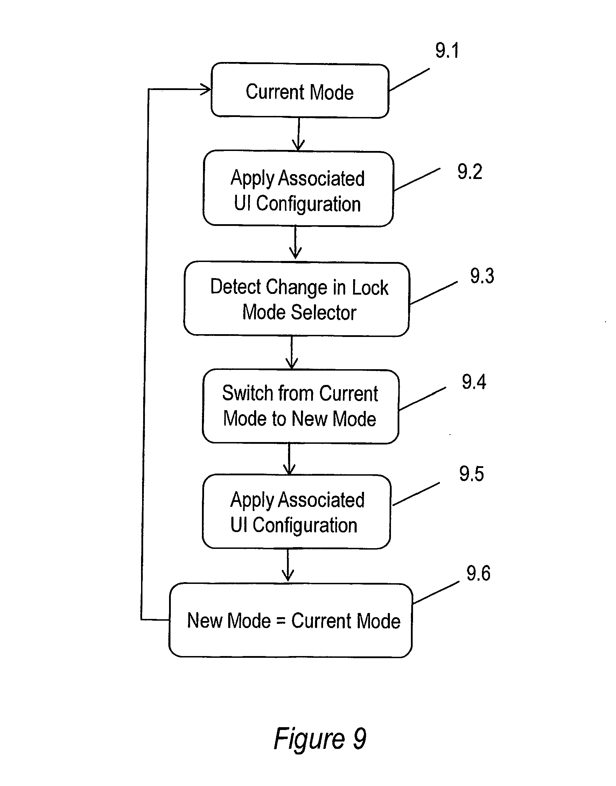

Referring to Figure 9, a summary of the operating steps employed by the terminal 100 in switching between the different operating modes will be described. In a first step 9.1, the current mode is set. In the next step 9.2, the UI configuration associated with the current operating mode is applied. In step 9.3, a change in the lock mode selector 130 is detected and, in response thereto, in step 9.4 a switch is made from the current operating mode to the new mode, in accordance with the UI interaction definitions 134. In step 9.5, the UI configuration associated with the new operating mode is applied. In step 9.6, the new operating mode is set as the current operating mode and the process returns to step 9.1.

Examples of the modification(s) effected by the UI controller 132 when switching from the unlock mode to the partial lock mode will now be described in third to eighth embodiments. It is again reiterated that the content presented on the display remains the same or substantially similar following the switch, with no intermediate unlocking operation being required of the user. Each of the following embodiments is applicable to the first and second embodiments described above, and relates to each of the alternatives for how the lock mode selection is made.

In a third embodiment, the partial lock configuration defines that, for given displayed content, a certain subset of inputs and/or gestures that can be effected in the unlock mode are available in the partial lock mode.

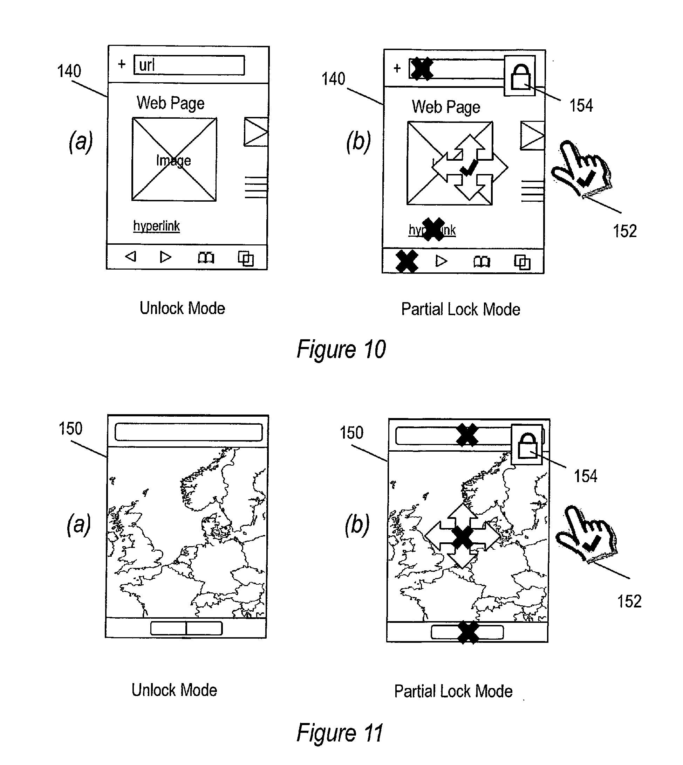

Referring to Figure 10(a), a web browser application 140 is shown presented on the display 102. In the unlock mode, the UI configuration data permits a range of inputs to effect interaction with the web browser 140. These include entry or modification of the URL through a keyboard interface, selection of hyperlinks or `forwards' or 'backwards' commands to effect inter-page navigation, and scrolling and zooming to effect intra-page navigation. In the partial lock mode, indicated graphically in Figure 10(b), the new UI configuration data permits only the intra-page navigation interactions; inter-page interactions such as URL entry, selection of hyperlinks and the forwards and backwards commands are blocked. Thus, when the user is walking, he/she can navigate around a large web page without accidentally activating a link which would otherwise take the browser to another page. The blocking of the toolbar is illustrated by an X at the left of the toolbar in the Figure.

In a fourth embodiment, referring to Figure 11(a), a map application 150 is shown presented on the display 102. In the unlock mode, the UI configuration data permits a range of inputs to effect interaction, including entry or modification of locations or co-ordinates, panning and zooming, location selections and so on. In the partial lock mode, indicate graphically in Figure 11(b), the new UI configuration data permits only zooming in and out functionality through pinch-type gestures, indicated by reference numeral 152. All other inputs and gestures are blocked in the partial lock mode.

As indicated in Figures 10(b) and 11(b), switching to the partial lock mode can be indicated graphically to the user, for instance by means of an icon 154. Otherwise, the content displayed remains substantially the same between the two modes of operation. The crosses shown in these figures are not provided on the UI; they are provided merely to illustrate that some functions are unavailable.

There is now described a fifth embodiment, which can be performed as an alternative or additionally to the above. In this implementation, the partial lock configuration defines that, for given displayed content, one or more selectable regions of the displayed content requires in the partial locked mode a more complex or robust gestural input than what is required in the unlocked mode to effect the corresponding function.

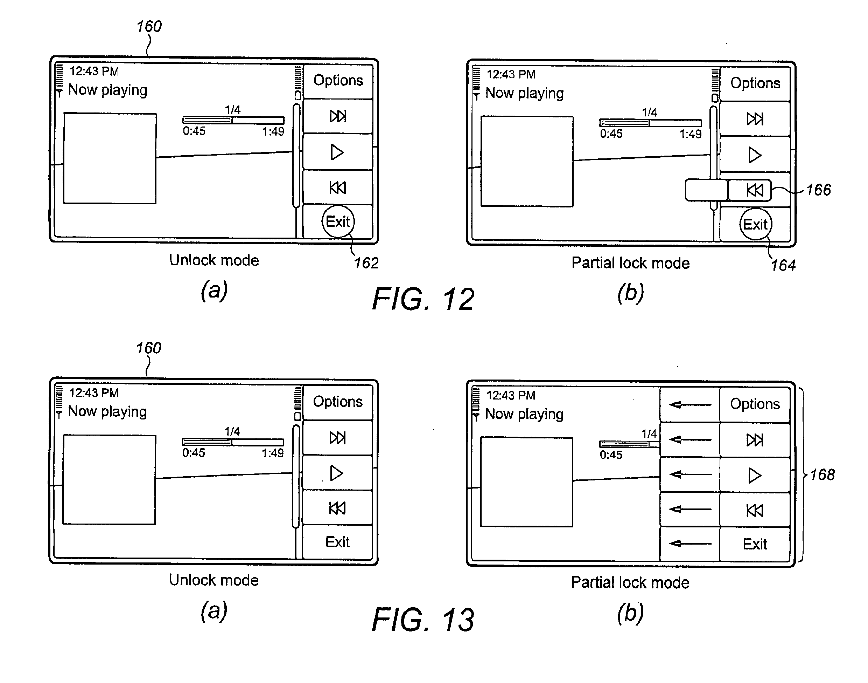

For example, referring to Figure 12(a), an application interface 160 which requires a simple touch interaction 162 in the unlock mode to effect selection of a function is modified when switched to the partial lock mode to require a prolonged touch interaction to effect the same function. In Figure 12(b), the time required for the prolonged touch interaction 164 to execute the command is indicated by a count-down progress indicator 166.

In a sixth embodiment, referring to Figures 13(a) and 13(b), the application interface 160 requires a gestural interaction in the partial lock mode, in place of one or more simple touch interactions in the unlock mode. In this case, the required gesture is a left-to-right gesture, as shown in Figure 13(b). Upon the lock mode selector 130 entering the partial lock mode, sliders 168 indicative of the required gesture are shown, although the displayed content otherwise stays substantially the same.

In general, a single tap or multi tap gesture needed to perform a function in the unlocked mode may be translated to a swipe, slide or multi-touch input needed to perform the same function in the partial lock mode.

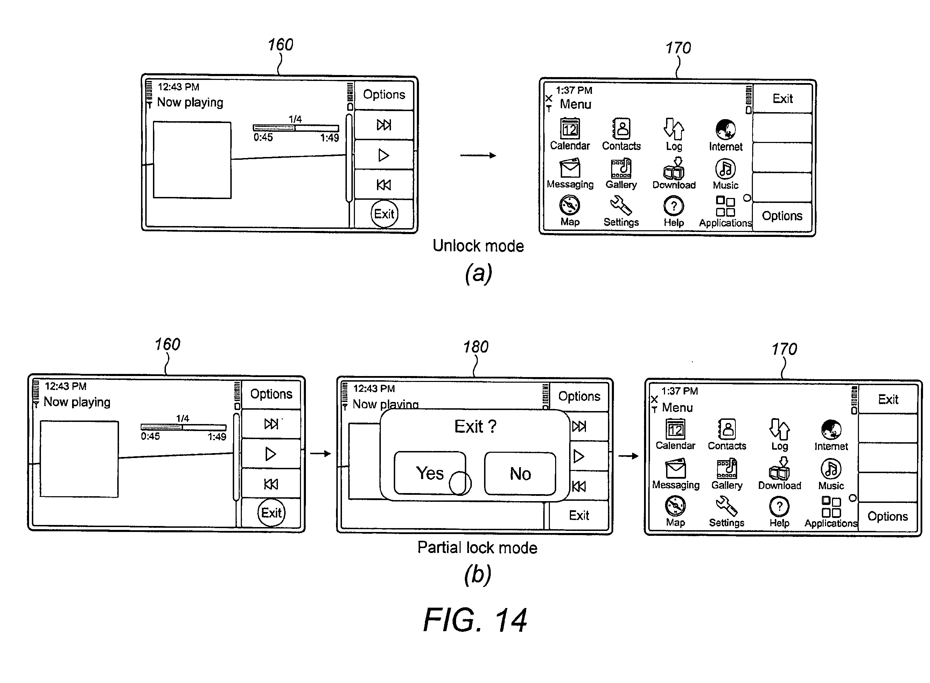

In a seventh embodiment, referring to Figures 14(a) and 14(b), the application interface 160 requires an interim confirmation interaction in order to effect a function. In Figure 14(a), there is shown how in the unlocked state, a simple touch interaction on the "Exit" button of the interface 160 transitions to a prior menu 170. In the partial lock state, and as indicated in Figure 14(b), the same touch interaction on the "Exit" button transitions to an interim pop-up 180 requiring a further confirmation gesture or input before transiting to the prior menu 170.

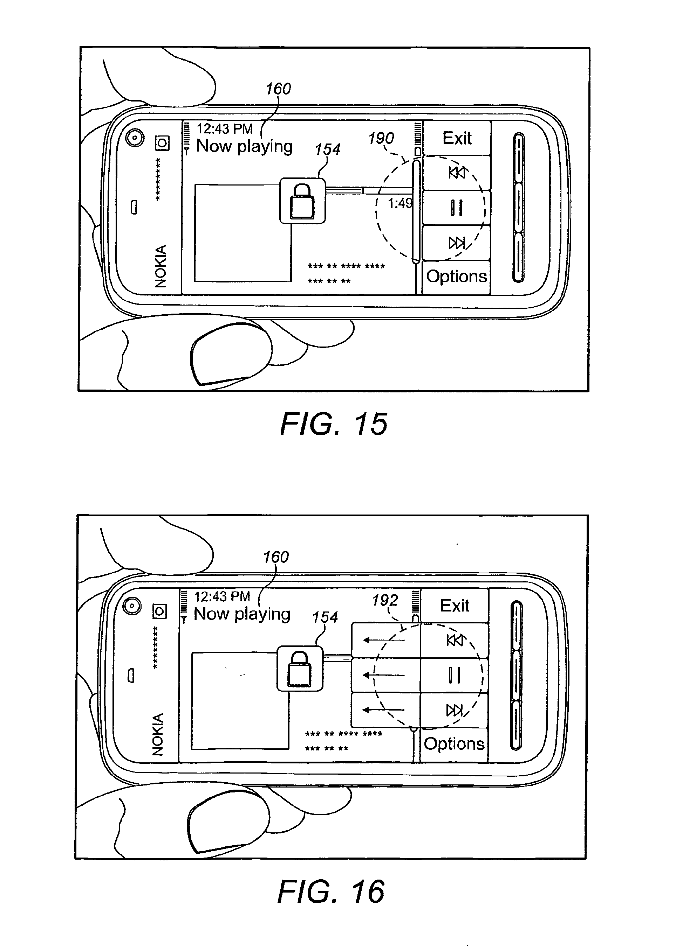

There is now described in an eighth embodiment a further implementation, which can be performed as an alternative or additionally to the above. In this implementation, the partial lock configuration defines that, for given displayed content, one or more selectable regions of the displayed content are enabled with the remainder being blocked from user interaction. Referring to Figure 15, there is shown the user interface 160 previously shown in, and described with reference to, Figure 14(a). In the partial lock mode, however, only a subset of media player controls 190 are maintained active with the remainder of the displayed content being blocked from user interaction. The fact that the lock mode selector is in the partial lock mode can be indicated by an icon 154 and/or by dimming the blocked region(s). Referring to Figure 16, the configuration in the partial lock mode is arranged to require the above-described translational gesture to effect selection of the or each active area 190. This can be by means of the indicated slider-type interface icons 192.

The lock mode selector 130 and UI controller 132 are implemented in software. For instance, they may be implemented as one or more modules forming part of the operating system 126. Alternatively, they may be provided as a software application 128 that is external to the operating system 126 but is executed alongside and operates in conjunction with the operating system 126 so as to operate as though it were part of the operating system. Here, other software applications 128 may call on the lock mode selector 130 and UI controller 132 so as to cause their functions to be effected. Alternatively, they may be provided as modules that form part of one or more software applications 128. In this way, software applications 128 that include the lock mode selector 130 and UI controller 132 can benefit from their functions and the other software applications do not so benefit.

Although described in the context of a terminal 100 having a touch screen display 102, the same principles can be employed in a terminal having a hardware keypad and also devices utilising a hovering input interface, that is where fingers or objects provide input to the interface by means of contactless hovering gestures above the interface.

As indicated previously, a visual indication of the partial mode being enabled can be presented on the display 102 or by means of another indicator, e.g. a LED indicator or using tactile feedback. Where certain interaction functionality is modified, a visual indication of such can be presented on the display 102, for example by dimming regions of the content blocked from interaction, or using some other colour or a lock symbol, as indicated in Figure 2, for example.

Further, in the event that a user attempts to interact with a blocked function or a blocked area of the display, feedback in the form of an audio message and/or haptic feedback can be employed for this purpose. In the event of such an attempt, the terminal may be effective to allow the user to exit the current partial lock mode, e.g. by presenting a pop-up query box overlaying the current set of presented content.

In addition to altering graphical user interface configurations, the entering of the terminal 100 into partial lock mode may affect other aspects of the user interface. For instance, a voice command input may be activated automatically upon entering partial lock mode, and automatically exited when partial lock mode is exited. In this way, the terminal 100 can become responsive to voice commands when this feature is more likely to be useful to a user, particularly when partial lock mode is entered automatically when the user is determined to be moving. Similarly, a gesture input to perform a function in an application may be activated automatically upon entering partial lock mode, and automatically exited when partial lock mode is exited. When the gesture input is active, the terminal is responsive to detection of the gesture by providing the related function. An example is the selective activation of a shake terminal gesture to provide a function of shuffling songs in a media player application.

In addition to altering graphical user interface configurations, the entering of the terminal 100 into partial lock mode may affect other operation of the terminal. For instance, NFC interaction may be automatically enabled, or automatically disabled, when the terminal 100 enters the partial lock mode. NFC interaction may be automatically reversed when the terminal 100 later exits the partial lock mode.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. Apparatus (100) comprising:
a user interface (102) for causing display of content generated by a software application (128) associated with a processor (106) and for receiving user inputs in relation to the presented content to effect interactions with the software application (128) in accordance with a user interface configuration;
a mode selector (130) for selecting between first and second modes of operation of the apparatus (100);
a user interface controller (132) operable to provide, for a given set of application content caused to be displayed by the user interface (102), different first and second user interface configurations, and to effect one of the first and second user interface configurations dependent on the selected mode of operation;
wherein the apparatus (100) is further configured such that content is not caused to be removed from the display in response to the mode selector (130) switching from the first mode of operation to the second mode of operation, the first mode being an unlocked mode of the apparatus (100) and the second mode being a partial locked mode of the apparatus (100).

2. Apparatus according to claim 1, wherein the mode selector is operable to switch automatically from the first mode to the second mode in accordance with detecting a predetermined condition associated with user action in relation to the apparatus.

3. Apparatus according to claim 2, wherein the mode selector is operable to detect one or more predetermined user inputs or gestures made through the user interface to effect automatic switching from the first mode to the second mode.

4. Apparatus according to claim 2, further comprising a motion sensor, and in which the mode selector is operable to detect a predetermined motion characteristic of the apparatus in order to effect automatic switching from the first mode to the second mode.

5. Apparatus according to claim 2, further comprising an orientation sensor, and in which the mode selector is operable to detect a predetermined orientation characteristic of the apparatus in order to effect automatic switching from the first mode to the second mode.

6. Apparatus according to any one of claims 2 to 5, further comprising means for manually overriding automatic switching from the first mode to the second mode.

7. Apparatus according to any preceding claim, wherein the second user interface configuration defines that, for the given set of displayed application content, only a subset of user interactions that can be effected in the first mode of operation can be effected in the second mode of operation.

8. Apparatus according to claim 7, wherein the second user interface configuration defines one or more active sub-regions of the displayed content through which user inputs are operable to effect interaction in the second mode of operation, the or each remaining regions being blocked in said mode, and optionally wherein the user interface controller is operable in the second mode of operation to indicate visually on the display the or each blocked regions.

9. Apparatus according to claim 8, wherein the first user interface configuration defines that zooming and one or both of selection and panning interactions can be effected through user interaction in the first mode of operation and wherein the second user interface configuration defines that only zooming can be effected in the second mode of operation.

10. Apparatus according to claim 8, wherein, in the event that the given application content is a page comprising one or more links to one or more other pages, the first user interface configuration defines that inter-page user interactions can be effected though said one or more links in the first mode of operation and wherein the second user interface configuration defines that inter-page user interactions are blocked in the second mode of operation, and optionally wherein the second user interface configuration defines that intra-page user interactions can be effected in the second mode of operation, for example to effect panning or zooming of the page.

11. Apparatus according to any preceding claim, wherein the second user interface configuration defines that, for the given set of displayed application content, the interaction required by a user to effect selection of a command or an object caused to be displayed on the display in the second mode of operation is different than that required to effect selection of said same command or object in the first mode of operation.

12. Apparatus according to claim 11, wherein the second user interface configuration further defines that interaction required to effect selection in the second mode of operation is more complex than that required to effect selection of said same command or object in the first mode of operation.

13. Apparatus according to claim 12, wherein:
the second user interface configuration defines that the interaction required to effect selection in the second mode of operation is prolonged in comparison with that required to effect selection in the first mode of operation, and optionally wherein the second user interface configuration defines that the prolonged interaction so required is a predetermined time period, the user interface controller being operable in the second mode of operation to indicate visually said time period on the display following commencement of the interaction.

14. Apparatus according to claim 12, wherein:
the second user interface configuration defines that, for a selection interaction which in the first mode of operation is a non-translational input, the interaction required to effect selection of the said same command or object in the second mode of operation is a translational interaction, and optionally wherein in the second mode of operation the user interface controller is operable to cause visual indication of the translational interaction required to effect selection of the said same command.

15. A method comprising:
causing an apparatus (100) to display content generated by a software application (128);
providing selectable first and second modes of operation of the apparatus (100);
in the first mode of operation, effecting user interactions with a given set of the displayed content through a user interface (102) in accordance with a first user interface configuration; and
responsive to a subsequent selection of the second mode of operation, effecting user interactions with the given set of displayed content through the user interface (102) in accordance with a second user interface configuration;
wherein content is not caused to be removed from the display in response to switching from the first mode of operation to the second mode of operation, the first mode being an unlocked mode of the apparatus (100) and the second mode being a partial locked mode of the apparatus (100).

## Patentansprüche

1. Vorrichtung (100), umfassend:
eine Benutzeroberfläche (102) zum Bewirken der Anzeige von Inhalt, der durch eine mit einem Prozessor (106) assoziierte Softwareanwendung (128) erzeugt wird, und zum Empfangen von Benutzereingaben in Bezug auf den präsentierten Inhalt, um Interaktionen mit der Softwareanwendung (128) gemäß einer Benutzeroberflächenkonfiguration zu bewirken;
einen Modusselektor (130) zum Auswählen zwischen einem ersten und zweiten Betriebsmodus der Vorrichtung (100);
eine Benutzeroberflächensteuerung (132), betreibbar zum Bereitstellen einer unterschiedlichen ersten und zweiten Benutzeroberflächenkonfiguration für eine gegebene Menge von Anwendungsinhalt, dessen Anzeige durch die Benutzeroberfläche (102) bewirkt wird, und zum Bewirken einer der ersten und zweiten Benutzeroberflächenkonfiguration abhängig von dem ausgewählten Betriebsmodus;
wobei die Vorrichtung (100) ferner so ausgelegt ist, dass nicht bewirkt wird, dass Inhalt aus der Anzeige entfernt wird, wenn der Modusselektor (130) von dem ersten Betriebsmodus zu dem zweiten Betriebsmodus wechselt, wobei der erste Modus ein entriegelter Modus der Vorrichtung (100) und der zweite Modus ein teilweise verriegelter Modus der Vorrichtung (100) ist.

2. Vorrichtung nach Anspruch 1, wobei der Modusselektor betreibbar ist zum automatischen Wechseln von dem ersten Modus zu dem zweiten Modus gemäß Detektion einer vorbestimmten Bedingung, die mit Benutzeraktion in Bezug auf die Vorrichtung assoziiert ist.

3. Vorrichtung nach Anspruch 2, wobei der Modusselektor betreibbar ist zum Detektieren einer oder mehrerer vorbestimmter Benutzereingaben oder -gesten, die mittels der Benutzeroberfläche erfolgen, um automatisches Wechseln von dem ersten Modus zu dem zweiten Modus zu bewirken.

4. Vorrichtung nach Anspruch 2, die ferner einen Bewegungssensor umfasst und bei der der Modusselektor betreibbar ist zum Detektieren einer für die Vorrichtung charakteristischen vorbestimmten Bewegung, um automatisches Wechseln von dem ersten Modus zu dem zweiten Modus zu bewirken.

5. Vorrichtung nach Anspruch 2, die ferner einen Orientierungssensor umfasst und bei der der Modusselektor betreibbar ist zum Detektieren einer für die Vorrichtung charakteristischen vorbestimmten Orientierung, um automatisches Wechseln von dem ersten Modus zu dem zweiten Modus zu bewirken.

6. Vorrichtung nach einem der Ansprüche 2 bis 5, die ferner Mittel zum manuellen Übersteuern des automatischen Wechsels von dem ersten Modus zu dem zweiten Modus umfasst.

7. Vorrichtung nach einem der vorhergehenden Ansprüche, wobei die zweite Benutzeroberflächenkonfiguration definiert, dass für die gegebene Menge von angezeigtem Anwendungsinhalt in dem zweiten Betriebsmodus nur eine Teilmenge von Benutzerinteraktionen, die im ersten Betriebsmodus bewirkt werden können, bewirkt werden kann.

8. Vorrichtung nach Anspruch 7, wobei die zweite Benutzeroberflächenkonfiguration eine oder mehrere aktive Teilregionen des angezeigten Inhalts definiert, mittels derer in dem zweiten Betriebsmodus Benutzereingaben betreibbar sind, um Interaktion zu bewirken, wobei die oder jede verbleibende Region in dem Modus blockiert ist und wobei gegebenenfalls die Benutzeroberflächensteuerung im zweiten Betriebsmodus betreibbar ist, um auf der Anzeige die oder jede blockierte Region visuell anzugeben.

9. Vorrichtung nach Anspruch 8, wobei die erste Benutzeroberflächenkonfiguration definiert, dass im ersten Betriebsmodus Zoomen und Auswahl- und/oder Schwenkinteraktionen mittels Benutzerinteraktion bewirkt werden können und wobei die zweite Benutzeroberflächenkonfiguration definiert, dass im zweiten Betriebsmodus nur Zoomen bewirkt werden kann.

10. Vorrichtung nach Anspruch 8, wobei, falls der gegebene Anwendungsinhalt eine Seite ist, die einen oder mehrere Links zu einer oder mehreren anderen Seiten umfasst, die erste Benutzeroberflächenkonfiguration definiert, dass im ersten Betriebsmodus seitenübergreifende Benutzerinteraktionen mittels des einen oder der mehreren Links bewirkt werden können und wobei die zweite Benutzeroberflächenkonfiguration definiert, dass im zweiten Betriebsmodus seitenübergreifende Benutzerinteraktionen blockiert sind, und wobei gegebenenfalls die zweite Benutzeroberflächenkonfiguration definiert, dass im zweiten Betriebsmodus seitenübergreifende Benutzerinteraktionen bewirkt werden können, um zum Beispiel Schwenken oder Zoomen der Seite zu bewirken.

11. Vorrichtung nach einem der vorhergehenden Ansprüche, wobei die zweite Benutzeroberflächenkonfiguration definiert, dass für die gegebene Menge von angezeigtem Anwendungsinhalt die von einem Benutzer erforderte Interaktion zum Bewirken von Auswahl eines Befehls oder eines Objekts, dessen Anzeige auf der Anzeige bewirkt wird, im zweiten Betriebsmodus von der verschieden ist, die im ersten Betriebsmodus erforderlich ist, um Auswahl desselben Befehls oder Objekts zu bewirken.

12. Vorrichtung nach Anspruch 11, wobei die zweite Benutzeroberflächenkonfiguration ferner definiert, dass zum Bewirken von Auswahl im zweiten Betriebsmodus erforderliche Interaktion komplizierter ist als die im ersten Betriebsmodus zum Bewirken von Auswahl desselben Befehls oder Objekts erforderliche.

13. Vorrichtung nach Anspruch 12, wobei
die zweite Benutzeroberflächenkonfiguration definiert, dass die zur Bewirkung von Auswahl im zweiten Betriebsmodus erforderliche Interaktion im Vergleich mit der im ersten Betriebsmodus zum Bewirken von Auswahl erforderlichen verlängert ist, und wobei gegebenenfalls die zweite Benutzeroberflächenkonfiguration definiert, dass die so erforderliche verlängerte Interaktion ein vorbestimmter Zeitraum ist, wobei die Benutzeroberflächensteuerung im zweiten Betriebsmodus betreibbar ist, um den Zeitraum nach dem Beginn der Interaktion visuell auf der Anzeige anzugeben.

14. Vorrichtung nach Anspruch 12, wobei
die zweite Benutzeroberflächenkonfiguration definiert, dass für eine Auswahlinteraktion, die im ersten Betriebsmodus eine Nicht-Translationseingabe ist, die zum Bewirken von Auswahl desselben Befehls oder Objekts im zweiten Betriebsmodus erforderliche Interaktion eine Translationsinteraktion ist, und wobei gegebenenfalls die Benutzeroberflächensteuerung im zweiten Betriebsmodus betreibbar ist zum Bewirken von visueller Angabe der zum Bewirken von Auswahl desselben Befehls erforderlichen Translationsinteraktion.

15. Verfahren, umfassend:
Bewirken, dass eine Vorrichtung (100) durch eine Softwareanwendung (128) erzeugten Inhalt anzeigt;
Bereitstellen eines auswählbaren ersten und zweiten Betriebsmodus der Vorrichtung (100);
im ersten Betriebsmodus: Bewirken von Benutzerinteraktionen mit einer gegebenen Menge des angezeigten Inhalts mittels einer Benutzeroberfläche (102) gemäß einer ersten Benutzeroberflächenkonfiguration; und
als Reaktion auf eine nachfolgende Auswahl des zweiten Betriebsmodus: Bewirken von Benutzerinteraktionen mit der gegebenen Menge von angezeigtem Inhalt mittels der Benutzeroberfläche (102) gemäß einer zweiten Benutzeroberflächenkonfiguration;
wobei als Reaktion auf Wechsel von dem ersten Betriebsmodus zu dem zweiten Betriebsmodus nicht bewirkt wird, dass Inhalt aus der Anzeige entfernt wird, wobei der erste Modus ein entriegelter Modus der Vorrichtung (100) ist und der zweite Modus ein teilweise verriegelter Modus der Vorrichtung (100) ist.

## Revendications

1. Appareil (100) comprenant :
une interface utilisateur (102) pour provoquer l'affichage d'un contenu généré par une application logicielle (128) associée à un processeur (106) et pour recevoir des entrées d'utilisateur en relation avec le contenu présenté pour effectuer des interactions avec l'application logicielle (128) conformément à une configuration de l'interface utilisateur ;
un sélecteur de mode (130) pour effectuer une sélection entre des premier et second modes de fonctionnement de l'appareil (100) ;
un contrôleur d'interface utilisateur (132) pouvant fonctionner pour fournir, pour un ensemble donné de contenu d'application amené à être affiché par l'interface utilisateur (102), différentes première et seconde configurations d'interfaces utilisateur, et pour mettre en oeuvre l'une des première et seconde configurations d'interface utilisateur en fonction du mode sélectionné de fonctionnement ;
où l'appareil (100) est en outre configuré de manière à ce que le contenu ne soit pas amené à être supprimé de l'affichage en réponse à une commutation du sélecteur de mode (130) du premier mode de fonctionnement au second mode de fonctionnement, le premier mode étant un mode déverrouillé de l'appareil (100) et le second mode étant un mode partiellement verrouillé de l'appareil (100).

2. Appareil selon la revendication 1, dans lequel le sélecteur de mode peut être utilisé pour commuter automatiquement du premier mode au second mode conformément à la détection d'une condition prédéterminée associée à une action de l'utilisateur en relation avec l'appareil.

3. Appareil selon la revendication 2, dans lequel le sélecteur de mode peut être utilisé pour détecter une ou plusieurs entrées d'utilisateur prédéterminées ou des gestes réalisés par l'intermédiaire de l'interface utilisateur pour effectuer une commutation automatique du premier mode au second mode.

4. Appareil selon la revendication 2, comprenant en outre un capteur de mouvement, et dans lequel le sélecteur de mode peut être utilisé pour détecter une caractéristique de mouvement prédéterminée de l'appareil afin d'effectuer une commutation automatique du premier mode au second mode.

5. Appareil selon la revendication 2, comprenant en outre un capteur d'orientation, et dans lequel le sélecteur de mode peut être utilisé pour détecter une caractéristique d'orientation prédéterminée de l'appareil afin d'effectuer une commutation automatique du premier mode au second mode.

6. Appareil selon l'une quelconque des revendications 2 à 5, comprenant en outre des moyens pour outrepasser manuellement la commutation automatique du premier mode au second mode.

7. Appareil selon l'une quelconque des revendications précédentes, dans lequel la seconde configuration de l'interface utilisateur détermine que, pour l'ensemble donné de contenu d'application affiché, seulement un sous-ensemble d'interactions de l'utilisateur qui peuvent être effectuées dans le premier mode de fonctionnement peut être effectué dans le second mode de fonctionnement.

8. Appareil selon la revendication 7, dans lequel la seconde configuration de l'interface utilisateur définit une ou plusieurs sous-régions actives du contenu affiché à travers lesquelles des entrées d'utilisateur peuvent être utilisées mettre en ouvre une interaction dans le second mode de fonctionnement, la zone restante ou chacune des zones restantes étant bloquée dans ledit mode, et, facultativement, dans lequel le contrôleur d'interface utilisateur peut être utilisé dans le second mode de fonctionnement pour indiquer visuellement sur l'écran la région bloquée ou chacune des régions bloquées.

9. Appareil selon la revendication 8, dans lequel la première configuration de l'interface utilisateur définit qu'un zoom et qu'une ou deux interactions de sélection et de panoramique peuvent être effectués par l'intermédiaire d'une interaction de l'utilisateur dans le premier mode de fonctionnement, et dans lequel la seconde configuration de l'interface utilisateur définit que seul le zoom peut être effectué dans le second mode de fonctionnement.

10. Appareil selon la revendication 8, dans lequel, dans le cas où le contenu de l'application donnée est une page comprenant un ou plusieurs liens vers une ou plusieurs autres pages, la première configuration de l'interface utilisateur définit que les interactions de l'utilisateur inter-page peuvent être effectuées par l'intermédiaire dudit ou desdits plusieurs liens dans le premier mode de fonctionnement, et dans lequel la seconde configuration de l'interface utilisateur définit que les interactions de l'utilisateur inter-page sont bloquées dans le second mode de fonctionnement, et, facultativement, dans lequel la seconde configuration de l'interface utilisateur définit que des interactions de l'utilisateur intra-page peuvent être effectuées dans le second mode de fonctionnement, par exemple pour effectuer un panoramique ou un zoom au niveau de la page.

11. Appareil selon l'une quelconque des revendications précédentes, dans lequel la seconde configuration de l'interface utilisateur définit que, pour un ensemble donné de contenu d'application affiché, l'interaction requise par un utilisateur pour effectuer la sélection d'une commande ou d'un objet amené à être affiché sur l'écran dans le second mode de fonctionnement est différente de celle qui est nécessaire pour effectuer la sélection de ladite même commande ou dudit même objet dans le premier mode de fonctionnement.

12. Appareil selon la revendication 11, dans lequel la seconde configuration de l'interface utilisateur définit en outre que l'interaction requise pour effectuer une sélection dans le second mode de fonctionnement est plus complexe que celle requise pour effectuer une sélection de ladite même commande ou dudit même objet dans le premier mode de fonctionnement.

13. Appareil selon la revendication 12, dans lequel :
la seconde configuration de l'interface utilisateur détermine que l'interaction requise pour effectuer une sélection dans le second mode de fonctionnement est prolongée par rapport à celle requise pour effectuer une sélection dans le premier mode de fonctionnement, et, facultativement, dans lequel la seconde configuration de l'interface utilisateur détermine que l'interaction prolongée ainsi requise est une période de temps prédéterminée, le contrôleur d'interface utilisateur étant utilisable dans le second mode de fonctionnement pour indiquer visuellement ladite période de temps sur l'écran après le début de l'interaction.

14. Appareil selon la revendication 12, dans lequel :
la seconde configuration de l'interface utilisateur définit que pour une interaction de sélection qui, dans le premier mode de fonctionnement, est une entrée non translationnelle, l'interaction requise pour effectuer la sélection de ladite même commande ou dudit même objet dans le second mode de fonctionnement est une interaction de translation et, facultativement, dans lequel, dans le second mode de fonctionnement, le contrôleur d'interface utilisateur est utilisable pour provoquer une indication visuelle de l'interaction de translation requise pour effectuer la sélection de ladite même commande.

15. Procédé comprenant les étapes suivantes :
amener un appareil (100) à afficher un contenu généré par une application logicielle (128) ;
fournir des premier et second modes de fonctionnement de l'appareil (100) sélectionnables ;
dans le premier mode de fonctionnement, effectuer des interactions d'utilisateur avec un ensemble donné du contenu affiché par l'intermédiaire d'une interface utilisateur (102) conformément à une première configuration de l'interface utilisateur ; et
en réponse à une sélection subséquente du second mode de fonctionnement, effectuer des interactions d'utilisateur avec l'ensemble donné de contenu affiché par l'intermédiaire de l'interface utilisateur (102) conformément à une seconde configuration de l'interface utilisateur ;
où le contenu n'est pas amené à être supprimé de l'affichage en réponse à une commutation du premier mode fonctionnement au second mode de fonctionnement, le premier mode étant un mode non verrouillé de l'appareil (100) et le second mode étant un mode partiellement verrouillé de l'appareil (100).
